# EUROPEAN PATENT SPECIFICATION

(11) **EP 2 305 719 B1**
(45) Date of publication and mention of the grant of the patent: **24.01.2018**
(21) Application number: 09800508.5
(22) Date of filing: 23.06.2009
(51) Int. Cl.: C08F 4/642, C08F 4/655, C08F 4/6592, C08F 10/00

(54) **METHOD FOR PREPARING AN OLEFIN POLYMERIZATION CATALYST AND OLEFIN POLYMERIZATION METHOD USING THE SAME**
VERFAHREN ZUR HERSTELLUNG EINES OLEFINPOLYMERISIERUNGSKATALYSATORS UND OLEFINPOLYMERISIERUNGSVERFAHREN DAMIT
PROCÉDÉ DE PRÉPARATION D'UN CATALYSEUR DE POLYMÉRISATION D'OLÉFINE ET PROCÉDÉ DE POLYMÉRISATION D'OLÉFINE AU MOYEN DE CE CATALYSEUR

(30) Priority: 21.07.2008 KR 20080070637
(43) Date of publication of application: 06.04.2011
(73) Proprietor: Daelim Industrial Co., Ltd., Daejeon 305-805 (KR)
(72) Inventor: HONG, Sah-Mun, Daejeon 305-720 (KR); KANG, Sung-Woo, Daejeon 305-805 (KR); JUN, Young-Jae, Daejeon 305-721 (KR); SOHN, Byung-Keel, Daejeon 305-720 (KR)
(74) Representative: Hoffmann Eitle
(86) International application number: PCT/KR2009/003348
(87) International publication number: WO 2010/011027

(56) References cited:
- EP-A1- 0 685 485
- EP-A1- 0 694 563
- EP-A2- 0 587 440
- WO-A1-98/32775
- US-A1- 2007 142 221
- US-B1- 6 410 659
- US-B1- 6 444 604

## Description

### [TECHNICAL FIELD]

This invention relates to a method for preparing an olefin polymerization catalyst and an olefin polymerization method using the same. More particularly, this invention relates to an olefin polymerization catalyst which can be produced by a simple process, has a desirable polymerization activity, can produce a polyolefin of a low melt index and a high molecular weight, and can control a molecular weight distribution and a composition of the produced olefin polymer or copolymer. By the olefin polymerization catalyst and the olefin polymerization method, an olefin polymer having desirable physical properties can be obtained.

### [BACKGROUND ART]

To produce a polyolefin, especially an ethylene polymer or an ethylene/α-olefin copolymer having a good impact strength and transparency, a metallocene catalyst system consisting of an organometallic compound(generally, metallocene) and an activator such as aluminoxane has been used as shown in German Patent No. 3,007,725, U.S. Patent Nos. 4,404,344, 4,874,880 and 5,324,800. The organometallic compound has ligands such as a cyclopentadienyl group, an indenyl group, a cycloheptadienyl group and a fluorenyl group to control a stereoregularity and a molecular weight of the produced polymer. Recently, the metallocene compound and the activator are supported by an inorganic carrier to produce a non-uniform solid catalyst, and the non-uniform solid catalyst is used for a slurry or a gas phase polymerization process to control the particle shape of the produced polymer as shown in U.S. Patent No. 4,808,561 and Korean Patent application No. 1998-44308. However, the conventional metallocene catalyst system requires a metallocene compound as a catalyst which is obtained by several reaction steps under complicated reaction conditions. Therefore, the conventional metallocene catalyst system increases the production cost of a polyolefin, and a polyolefin of a high molecular weight cannot be easily produced.

### [DISCLOSURE]

### [TECHNICAL PROBLEM]

Therefore, it is an object of the present invention to provide an olefin polymerization catalyst which can be produced by a simple process and can have various catalytic properties in accordance with the combination of its components. The olefin polymerization catalyst has a desirable polymerization activity, and can produce a tailor-made polymer having a relatively high molecular weight, and thus commercially desirable.

It is other object of the present invention to provide an olefin polymerization catalyst which can easily control a molecular weight, a molecular weight distribution, and a composition of a produced olefin polymer or copolymer.

It is another object of the present invention to provide an olefin polymerization method using the olefin polymerization catalyst.

### [TECHNICAL SOLUTION]

To accomplish these and other objects, the present invention provides a method for preparing an olefin polymerization catalyst comprising: first mixing an organic compound of Formula 1; an organometallic compound of Formula 2 and an aluminoxane, and then adding thereto a reaction mixture of an organic transition metal compound of Formula 3 and mixing, wherein:

[Formula 1] R¹-H or R¹-Q-R¹

in Formula 1, R¹ is a cyclic hydrocarbyl group of 5 to 30 carbon atoms having at least 2 conjugated double bonds, and Q is a divalent group for bridging R¹s selected from the group consisting of (CR⁵₂)_{b}, (SiR⁵₂)_{b}, (GeR⁵₂)_{b}, NR⁵ and PR⁵, wherein the substituent R⁵ is independently a hydrogen atom, an alkyl radical of 1 to 20 carbon atoms, a cycloalkyl radical of 3 to 20 carbon atoms, an alkenyl radical of 1 to 20 carbon atoms, an aryl radical of 6 to 20 carbon atoms, an alkylaryl radical of 7 to 20 carbon atoms or an arylalkyl radical of 7 to 20 carbon atoms, b is an integer of 1 to 4, when Q is (CR⁵₂)_{b}, (SiR⁵₂)_{b} or (GeR⁵₂)_{b}, the two substituents R⁵_{S} that are bonded to carbon(C), silicon(Si), germanium(Ge) can be connected with each other to form a ring of 2 to 7 carbon atoms;

[Formula 2] M¹R²ₘR³ₙR⁴ₚR⁶_{q}

in Formula 2, M¹ is an element selected from the group consisting of elements of Group 1, 2, 12, 13 and 14 of the Periodic Table, R², R³, R⁴ and R⁶ are independently a hydrocarbyl group of 1 to 24 carbon atoms, an amide group, an alkoxy group or a halogen atom, m, n, p and q are independently 0 or 1, and m+n+p+q is equal to the valence of M¹;

[Formula 3] M²R⁷ᵣXₛ

in Formula 3, M² is titanium(Ti), zirconium(Zr) or hafnium(Hf), R⁷ is a cyclic hydrocarbyl group of 5 to 30 carbon atoms having at least 2 conjugated double bonds, X is a halogen atom, r is 0 or 1, s is an integer of 3 or 4, and r+s is equal to the valence of metal M².

The present invention also provides an olefin polymerization catalyst in which the catalyst including the organic compound of Formula 1, the organometallic compound of Formula 2, the organic transition metal compound of Formula 3, and the aluminoxane is contacted with an organic or inorganic carrier.

The present invention also provides an olefin polymerization method including the step of polymerizing at least one olefin in the presence of the polymerization catalyst.

### [ADVANTAGEOUS EFFECTS]

The method for preparing an olefin polymerization catalyst according to the present invention may have various combinations by selecting the organic compound, the organometallic compound, and the organic transition metal compound, and can be used to prepare various polymers having a relatively high molecular weight according to the user's need. The catalyst can be produced by a simple process which minimizes the manufacturing time and manufacturing steps for producing the catalyst. The olefin polymerization catalyst has a desirable polymerization activity, which increases the productivity of polyolefin. In addition, by using the olefin polymerization method according to the present invention, the molecular weight, the molecular weight distribution, and the composition of the produced olefin polymer or copolymer can be easily controlled in an uniform phase(solution) or a non-uniform phase(gas or slurry) polymerization process..

### [MODE FOR INVENTION]

Hereinafter, the present invention will be described in detail so that a skilled person in the art would easily carry out the present invention.

The olefin polymerization catalyst of the present invention is prepared by first mixing an organic compound of Formula 1; an organometallic compound of Formula 2 and an aluminoxane, and then adding thereto a reaction mixture of an organic transition metal compound of Formula 3 and an aluminoxane, and mixing, wherein:

[Formula 1] R¹-H or R¹-Q-R¹

In Formula 1, R¹ is a cyclic hydrocarbyl group of 5 to 30 carbon atoms having at least 2 conjugated double bonds, and Q is a divalent group for bridging R¹s selected from the group consisting of (CR⁵₂)_{b}, (SiR⁵₂)_{b}, (GeR⁵₂)_{b}, NR⁵ and PR⁵, wherein the substituent R⁵ is independently a hydrogen atom, an alkyl radical of 1 to 20 carbon atoms, a cycloalkyl radical of 3 to 20 carbon atoms, an alkenyl radical of 1 to 20 carbon atoms, an aryl radical of 6 to 20 carbon atoms, an alkylaryl radical of 7 to 20 carbon atoms or an arylalkyl radical of 7 to 20 carbon atoms, b is an integer of 1 to 4, when Q is (CR⁵₂)_{b}, (SiR⁵₂)_{b} or (GeR⁵₂)_{b}, the two substituents R⁵ that are bonded to carbon(C), silicon(Si), germanium(Ge) can be connected with each other to form a ring of 2 to 7 carbon atoms.

[Formula 2] M¹R²ₘR³ₙR⁴ₚR⁶_{q}

In Formula 2, M¹ is an element selected from the group consisting of elements of Group 1, 2, 12, 13 and 14 of the Periodic Table, R², R³, R⁴ and R⁶ are independently a hydrocarbyl group of 1 to 24 carbon atoms, an amide group, an alkoxy group or a halogen atom, m, n, p and q are independently 0 or 1, and m+n+p+q is equal to the valence of M¹.

[Formula 3] M²R⁷ᵣXₛ

In Formula 3, M² is titanium(Ti), zirconium(Zr) or hafnium(Hf), R⁷ is a cyclic hydrocarbyl group of 5 to 30 carbon atoms having at least 2 conjugated double bonds, X is a halogen atom, r is 0 or 1, s is an integer of 3 or 4, and r+s is equal to the valence of metal M².

The organic compound of Formula 1 is explained as follows.

R¹ is a cyclic hydrocarbyl group of 5 to 30 carbon atoms having at least 2 conjugated double bonds. The cyclic hydrocarbyl group of 5 to 30 carbon atoms having at least 2 conjugated double bonds can be substituted or non- substituted, and the number of the conjugated double bond is preferably 2 to 4, and more preferably 2 or 3. The number of the carbon atoms of the cyclic hydrocarbyl group is preferably 5 to 13. Examples of the cyclic hydrocarbyl group include cyclopentadiene, substituted cyclopentadiene, indene, substituted indene, azulene, substituted azulene, fluorene, and substituted fluorene group. R¹ can be partially substituted with 1 to 6 substituents. The substituent can be selected from the group consisting of an alkyl group of 1 to 20 carbon atoms, an alkenyl group of 3 to 20 carbon atoms, a cycloalkyl group of 3 to 20 carbon atoms, a haloalkyl group of 1 to 20 carbon atoms, an aryl group of 6 to 20 carbon atoms, an arylalkyl group of 6 to 20 carbon atoms, an arylsilyl group of 6 to 20 carbon atoms, an alkylaryl group of 6 to 20 carbon atoms, an alkoxy group of 1 to 20 carbon atoms, an alkylsiloxy group of 1 to 20 carbon atoms, an aryloxy group of 6 to 20 carbon atoms, a halogen atom, an amino group and the mixtures thereof. Q is a divalent group selected from the group consisting of (CR⁵₂)_{b}, (SiR⁵₂)_{b}, (GeR⁵₂)_{b}, NR⁵ and PR⁵ for bridging R¹, wherein the substituent R⁵ is independently a hydrogen atom, an alkyl radical of 1 to 20 carbon atoms, a cycloalkyl radical of 3 to 20 carbon atoms, an alkenyl radical of 1 to 20 carbon atoms, an aryl radical of 6 to 20 carbon atoms, an alkylaryl radical of 7 to 20 carbon atoms or arylalkyl radical of 7 to 20 carbon atoms, b is an integer of 1 to 4, preferably an integer of 1 or 2, when Q is (CR⁵₂)_{b}, (SiR⁵₂)_{b} or (GeR⁵₂)_{b}, the two substituents R⁵ that are bonded to carbon(C), silicon(Si), germanium(Ge) can be connected with each other to form a ring of 2 to 7 carbon atoms.

Examples of the organic compound of Formula 1 include cyclopentadiene, methylcyclopentadiene, 1,2,3,4-tetramethylcyclopentadiene, pentamethylcyclopentadiene, ethylcyclopentadiene, propylcyclopentadiene, butylcyclopentadiene, isobutylcyclopentadiene, octadecylcyclopentadiene, cyclopentylcyclopentadiene, cyclohexylcyclopentadiene, 1,3-butylmethyl cyclopentadiene, indene, 1-methylindene, 2-methylindene, 1-ethylindene, 2-ethylindene, 1-propylindene, 2-propylindene, 2-phenylindene, 3-phenylindene, and fluorene, which can be used alone or as mixtures of two or more thereof.

Other examples of the organic compound of Formula 1 include bis(indenyl)ethane, bis(4,5,6,7-tetrahydro-1-indenyl)ethane, 1,3-propandinyl-bis(indene), 1,3-propandinyl-bis(4,5,6,7-tetrahydro-1-indene), propylene-bis (indene), diphenylmethylene-bis(indene), propylene-bis(fluorene), and ' diphenylmethylene-bis(fluorene), which can be used alone or as mixtures of two or more thereof.

The organometallic compound of Formula 2 is explained as follows.

In Formula 2, M¹ is an element selected from the group consisting of elements of Group 1, 2, 12, 13 and 14 of the Periodic Table. Examples of M¹ includes Lithium(Li), Sodium(Na), Potassium(K), Magnesium(Mg), Zinc(Zn), Boron(B), Aluminum(Al), Gallium(Ga), Indium(In), and Thallium(Tl) Preferably, M¹ is Lithium(Li), Sodium(Na), Magnesium (Mg) or Aluminum (Al). R², R³, R⁴ and R⁶ are independently a hydrocarbyl group of 1 to 24 carbon atoms, preferably, a hydrocarbyl group of 1 to 12 carbon atoms, an amide group, an alkoxy group or a halogen atom. Specifically, R², R³, R⁴ and R⁶ can be an alkyl group such as methyl, ethyl, propyl, isopropyl, butyl, t-butyl, isobutyl, pentyl, hexyl, and octyl, a cycloalkyl group such as cyclopentyl, cyclohexyl, and cycloheptyl, an aryl group such as phenyl, an arylalkyl group such as benzyl m, n, p and q are independently an integer of 0 or 1, and m+n+p+q is equal to the valence of M¹.

Examples of the organometallic compound of Formula 2 include lithium, sodium, potassium, magnesium, aluminum, methyl lithium, ethyl lithium, propyl lithium, butyl lithium, isobutyl lithium, lithium amide, lithium dimethylamide, benzyl magnesium bromide, butyl magnesium chloride, butyl magnesium bromide, ethyl magnesium bromide, dibutyl magnesium, heptylbutyl magnesium, diheptyl magnesium, triethyl aluminum, trimethyl aluminum, triisobutyl aluminum, thallium ethoxide diethyl zinc, and dimethyl zinc, which can be used alone or as mixtures of two or more thereof.

The organic transition metal compound of Formula 3 is explained as follows.

In Formula 3, M² is titanium(Ti), zirconium(Zr) or hafnium(Hf), R⁷ is a non-substituted or substituted cyclic hydrocarbyl group of 5 to 30 carbon atoms having at least 2 conjugated double bonds. The number of the conjugated double bond is preferably 2 to 4, and more preferably 2 or 3, and the number of the carbon atoms of the cyclic hydrocarbyl group is preferably 5 to 13. Specific examples of R⁷ include a cyclopentadienyl, a substituted cyclopentadienyl, an indenyl, a substituted indenyl, an azulenyl, a substituted azulenyl, a fluorenyl, and a substituted fluorenyl group. R⁷ can be partially substituted with 1 to 6 substituents. The substituent can be selected from the group consisting of an alkyl group of 1 to 20 carbon atoms, a cycloalkyl group of 3 to 20 carbon atoms, a haloalkyl group of 1 to 20 carbon atoms, an aryl group of 6 to 20 carbon atoms, an arylalkyl group of 6 to 20 carbon atoms, an arylsilyl group of 6 to 20 carbon atoms, an alkylaryl group of 6 to 20 carbon atoms, an alkoxy group of 1 to 20 carbon atoms, an alkylsiloxy group of 1 to 20 carbon atoms, an aryloxy group of 6 to 20 carbon atoms, a halogen atom, an amino group and the mixtures thereof. Namely, R⁷ can be the same hydrocarbyl group defined for R¹ of Formula 1. In Formula 3, X is a halogen atom, r is an integer of 0 or 1, s is an integer of 3 or 4, and r+s is equal to the valence of metal M².

Examples of the organic transition metal compound of Formula 3 include titanium fluoride, titanium chloride, titanium bromide, titanium iodide, zirconium fluoride, zirconium chloride, zirconium bromide, zirconium iodide, hafnium fluoride, hafnium chloride, hafnium bromide, hafnium iodide, cyclopentadienyl titanium trifluoride, cyclopentadienyl titanium trichloride, cyclopentadienyl titanium tribromide, cyclopentadienyl titanium triiodide, cyclopentadienyl zirconium trifluoride, cyclopentadienyl zirconium trichloride, cyclopentadienyl zirconium tribromide, cyclopentadienyl zirconium triiodide, cyclopentadienyl hafnium trifluoride, cyclopentadienyl hafnium trichloride, cyclopentadienyl hafnium tribromide, cyclopentadienyl hafnium triiodide, methylcyclopentadienyl titanium trifluoride, methylcyclopentadienyl titanium trichloride, methylcyclopentadienyl titanium tribromide, methylcyclopentadienyl titanium triiodide, methylcyclopentadienyl zirconium trifluoride, methylcyclopentadienyl zirconium trichloride, methylcyclopentadienyl zirconium tribromide, methylcyclopentadienyl zirconium triiodide, methylcyclopentadienyl hafnium trifluoride, methylcyclopentadienyl hafnium trichloride, methylcyclopentadienyl hafnium tribromide, methylcyclopentadienyl hafnium triiodide, butylcyclopentadienyl titanium trifluoride, butylcyclopentadienyl titanium trichloride, butylcyclopentadienyl titanium tribromide, butylcyclopentadienyl titanium triiodide, butylcyclopentadienyl zirconium trifluoride, butylcyclopentadienyl zirconium trichloride, butylcyclopentadienyl zirconium tribromide, butylcyclopentadienyl zirconium triiodide, butylcyclopentadienyl hafnium trifluoride, butylcyclopentadienyl hafnium trichloride, butylcyclopentadienyl hafnium tribromide, butylcyclopentadienyl hafnium triiodide, pentamethylcyclopentadienyl titanium trifluoride, pentamethylcyclopentadienyl titanium trichloride, pentamethylcyclopentadienyl titanium tribromide, pentamethylcyclopentadienyl titanium triiodide, pentamethylcyclopentadienyl zirconium trifluoride, pentamethylcyclopentadienyl zirconium trichloride, pentamethylcyclopentadienyl zirconium tribromide, pentamethylcyclopentadienyl zirconium triiodide, pentamethylcyclopentadienyl hafnium trifluoride, pentamethylcyclopentadienyl hafnium trichloride, pentamethylcyclopentadienyl hafnium tribromide, pentamethylcyclopentadienyl hafnium triiodide, indenyl titanium trifluoride, indenyl titanium trichloride, indenyl titanium tribromide, indenyl titanium triiodide, indenyl zirconium trifluoride, indenyl zirconium trichloride, indenyl zirconium tribromide, indenyl zirconium triiodide, indenyl hafnium trifluoride, indenyl hafnium trichloride, indenyl hafnium tribromide, indenyl hafnium triiodide, 4,5,6,7-tetrahydroindenyl titanium trifluoride, 4,5,6,7-tetrahydroindenyl titanium trichloride, 4,5,6,7-tetrahydroindenyl titanium tribromide, 4,5,6,7-tetrahydroindenyl titanium triiodide, 4,5,6,7-tetrahydroindenyl zirconium trifluoride, 4,5,6,7-tetrahydroindenyl zirconium trichloride, 4,5,6,7-tetrahydroindenyl zirconium tribromide, 4,5,6,7-tetrahydroindenyl zirconium triiodide, 4,5,6,7-tetrahydroindenyl hafnium trifluoride, 4,5,6,7-tetrahydroindenyl hafnium trichloride, 4,5,6,7-tetrahydroindenyl hafnium tribromide, 4,5,6,7-tetrahydroindenyl hafnium triiodide, methylindenyl titanium trifluoride, methylindenyl titanium trichloride, methylindenyl titanium tribromide, methylindenyl titanium triiodide, methylindenyl zirconium trifluoride, methylindenyl zirconium trichloride, methylindenyl zirconium tribromide, methylindenyl zirconium triiodide, methylindenyl hafnium trifluoride, methylindenyl hafnium trichloride, methylindenyl hafnium tribromide, methylindenyl hafnium triiodide, phenylindenyl titanium trifluoride, phenylindenyl titanium trichloride, phenylindenyl titanium tribromide, phenylindenyl titanium triiodide, phenylindenyl zirconium trifluoride, phenylindenyl zirconium trichloride, phenylindenyl zirconium tribromide, phenylindenyl zirconium triiodide, phenylindenyl hafnium trifluoride, phenylindenyl hafnium trichloride, phenylindenyl hafnium tribromide, phenylindenyl hafnium triiodide, fluorenyl titanium trifluoride, fluorenyl titanium trichloride, fluorenyl titanium tribromide, fluorenyl titanium triiodide, fluorenyl zirconium trifluoride, fluorenyl zirconium trichloride, fluorenyl zirconium tribromide, fluorenyl zirconium triiodide, fluorenyl hafnium trifluoride, fluorenyl hafnium trichloride, fluorenyl hafnium tribromide, and fluorenyl hafnium triiodide, which can be used alone or as mixtures of two or more thereof.

The aluminoxane is used as an activator and for scavenging impurities, and can be represented by the following Formula 4.

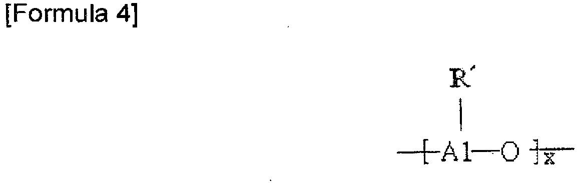

In Formula 4, R' is a hydrocarbyl radical of 1 to 10 carbon atoms, and x is an integer of 1 to 70.

The aluminoxane may have a linear, a cyclic, or a network structure, and the linear aluminoxane can be represented by the following Formula 5 and the cyclic aluminoxane can be represented by the following Formula 6.

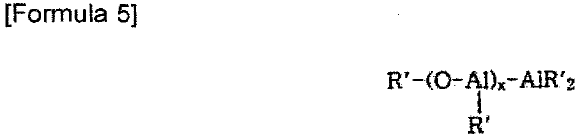

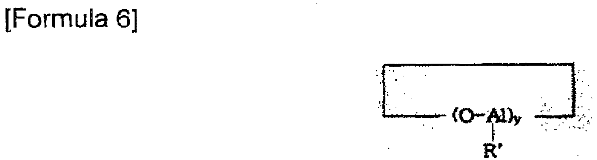

In Formulas 4 and 5, R' is a hydrocarbyl radical, and preferably a linear or a branched alkyl radical of 1 to 10 carbon atoms. More preferably, most of R' is methyl groups. x is an integer of 1 to 50, and preferably an integer of 10 to 40. y is an integer of 3 to 50, and preferably an integer of 10 to 40.

The alkyl aluminoxane is commercially available, and the examples of alkyl aluminoxane include methylaluminoxane, ethylaluminoxane, butylaluminoxane, isobutylaluminoxane, hexylaluminoxane, and octylaluminoxane, decylaluminoxane. The aluminoxane is commercially available in various forms of hydrocarbon solutions. Preferable aluminoxane is an aromatic hydrocarbon solution of aluminoxane, and more preferable aluminoxane is an aluminoxane dissolved in toluene. In the present invention, a single aluminoxane or mixtures of more than one aluminoxanes can be used. The alkyl aluminoxane can be prepared by various conventional methods. For example, the alkyl aluminoxane can be prepared by adding proper amount of water to trialkylaluminum, or, by reacting a hydrocarbyl compound having water or an inorganic hydrated salt with trialkylaluminum. Conventionally, a mixture of linear aluminoxane and cyclic aluminoxane is obtained.

The olefin polymerization catalyst according to the present invention can be prepared by mixing 0.2 to 20 mole, preferably 0.5 to 10 mole of the organic compound of Formula 1, 0.22 to 22 mole, preferably 0.55 to 11 mole of the organometallic compound of Formula 2, and 1 to 100,000 mole, preferably 5 to 2,500 mole of aluminum of the aluminoxane with respect to 1 mole of the organic transition metal compound of Formula 3.

For example, the four compounds can be mixed for 5 minutes to 24 hours, preferably 15 minutes to 16 hours simultaneously. The organic compound of Formula 1, the organometallic compound of Formula 2 and the aluminoxane are first mixed for 5 minutes to 10 hours, preferably for 15 minutes to 4 hours, and then, a reaction mixture of the organic transition metal compound of Formula 3 and the aluminoxane is added thereto and mixed for 5 minutes to 24 hours, preferably for 15 minutes to 16 hours. The 4 compounds can be mixed by various ways, and conventionally, mixed under an inert atmosphere of nitrogen or argon, without a solvent, or in the presence of an inert hydrocarbon solvent such as heptane, hexane, benzene, toluene, xylene or mixtures thereof. The temperature of the mixing process is 0 to 150°C, preferably 10 to 90°C. The catalyst solution in which the catalyst is uniformly dissolved in the hydrocarbon solvent can be used as it stands, or the catalyst in a solid powder state in which the solvent is removed can be used. The catalyst in a solid powder state can be prepared by carrying out a precipitation reaction of the catalyst solution, and solidifying the precipitate

The present invention also provides an olefin polymerization catalyst in which the catalyst including the organic compound of Formula 1, the organometallic compound of Formula 2, the organic transition metal compound of Formula 3, and the aluminoxane is contacted with an organic or inorganic carrier. Therefore, the catalyst of the present invention can be supported by a carrier or may form an insoluble particle with the carrier.

The method for contacting the catalyst of the present invention with the carrier will be explained.

At first, a solution state catalyst is prepared by mixing the organic compound of Formula 1, the organometallic compound of Formula 2, the organic transition metal compound of Formula 3, and the aluminoxane, and the catalyst is contacted with a porous carrier(For example, a silica carrier having pore sizes of 50 to 500 Å and a pore volume of 0.1 to 5.0 cm³/g) to form a slurry. Next, the catalyst of the slurry state is treated with an acoustic wave or oscillating wave having the frequency of 1 to 10,000kHz at 0°C to 120°C for 1 to 6 hours to uniformly infiltrate the catalyst components into the pores of the carrier. And then, the catalyst slurry is dried under vacuum or nitrogen flow to form a catalyst of a solid powder state.

The acoustic wave or oscillating wave is preferably ultrasonic waves, and more preferably has the frequency of 20 to 500 kHz. After applying the acoustic wave or the oscillating wave to the catalyst, the contacting process of the catalyst and the carrier may further include the step of washing the supported catalyst with a hydrocarbon selected from the group consisting of pentane, hexane, heptane, isoparaffin, toluene, xylene and mixtures thereof.

The carrier can be a material having micro pores and a large surface area, and includes an inorganic carrier such as a porous inorganic compound, and inorganic salt, and an organic carrier such as an organic compound. The inorganic carrier may be in any shape such as powder, particle, flake, foil and fiber under the condition that the shape can be maintained while supporting the catalyst. Regardless of the shape of the inorganic carrier, the maximum length of the inorganic carrier is generally from 5 to 200 *µ*m, preferably from 10 to 100 *µ*m, the preferable surface area of the inorganic carrier is 50 to 1,000 m²/g and the preferable pore volume is 0.05 to 5 cm³/g. Generally, the inorganic carrier is treated to remove water or hydroxyl group thereform before use. The treatment can be carried out by calcining the carrier at 200°C to 900°C under an inert atmosphere such as air, nitrogen, or argon.

Examples of the inorganic salt or the inorganic carrier include silica, alumina, bauxite, zeolite, MgCl₂, CaCl₂, MgO, ZrO₂, TiO₂, B₂O₃, CaO, ZnO, BaO, ThO₂, and mixtures thereof, such as SiO₂-MgO, SiO₂-Al₂O₃, SiO₂-TiO₂, SiO₂-V₂O₅, SiO₂-CrO₃, or SiO₂-TiO₂-MgO. Small amount of carbonate, sulfate, or nitrate can be added to these compounds.

Examples of the organic carrier include starch, cyclodextrin, or synthetic polymer.

Examples of the solvent, which is used for contacting the catalyst of the present invention into the carrier, include an aliphatic hydrocarbon solvent, such as pentane, hexane, heptane, octane, nonane, decane, undecane, or dodecane; an aromatic hydrocarbon solvent, such as benzene, monochlorobenzene, dichlorobenzene, trichlorobenzene, or toluene; and a halogenated aliphatic hydrocarbon solvent, such as dichloromethane, trichloromethane, dichloroethane, or trichloroethane. The solvent or the mixtures thereof can be used for the supporting process.

The olefin polymerization catalyst of the present invention which contacts with the carrier preferably includes 0.2 to 20 mole, preferably 0.5 to 10 mole of the organic compound of Formula 1, and 1 to 1,000 mole, preferably 1 to 500 mole of aluminum of the aluminoxane with respect to 1 mole of the organic transition metal compound of Formula 3.

The olefin polymerization catalyst of the present invention includes not only a catalyst of a uniform solution state, but also a catalyst supported with an inorganic carrier(silica, alumina, and silica-alumina mixture) or an insoluble particle of the catalyst and the carrier.

The present invention also provides an olefin polymerization method including the step of polymerizing at least one olefin in the presence of the polymerization catalyst of the present invention.

The catalyst of the present invention includes not only a catalyst of a uniform solution state, but also a catalyst supported with an inorganic carrier(silica, alumina, and silica-alumina mixture) or an insoluble particle of the catalyst and the carrier. Thus, the olefin polymerization method of the present invention can be carried out by a solution phase, a slurry phase, a bulk phase or a gas phase polymerization reaction. The conditions for the polymerization reactions can be varied according to the state of the catalyst(homogeneous or heterogeneous phase(supported phase)), the polymerization method (solution polymerization, slurry polymerization, gas phase polymerization), target polymer properties or the polymer shape. Such variation can be easily carried out by a skilled person in the art.

When the polymerization is carried out in a solution phase or a slurry phase, a solvent or olefin may work as a reaction medium. One or two or more olefins can be used for the polymerization. Exemplary solvent includes propane, butane, pentane, hexane, octane, decane, dodecane, cyclopentane, methylcyclopentane, cyclohexane, benzene, toluene, xylene, dichloromethane, chloroethane, 1,2-dichloroethane, or chlorobenzene, and, if desired, mixtures of the solvents can be used.

The olefin polymerization catalyst of the present invention can be used for a copolymerization of a monomer/a comonomer as well as a polymerization of a monomer. Preferable examples of the olefin for the polymerization or the copolymerization include α-olefins, cyclic olefins, dienes, trienes, and styrenes.

The α-olefin includes an aliphatic olefin of 2 to 12 carbon atoms, preferably 2 to 8 carbon atoms, more specifically includes ethylene, propylene, butene-1, pentene-1, 3-methylbutene-1, hexene-1, 4-methylpentene-1, 3-methylpentene-1, heptene-1, octene-1, decene-1, 4,4-dimethyl-1-pentene, 4,4-diethyl-1-hexene, or 3,4-dimethyl-1-hexene. The α-olefin may be polymerized to form a single polymer, an alternating copolymer, a random copolymer or a block copolymer. The copolymerization of the α-olefin includes the copolymerization of ethylene and α-olefin of 2 to 12 carbon atoms, preferably 2 to 8 carbon atoms(ethylene and propylene, ethylene and butene-1, ethylene and hexene-1, ethylene and 4-methylpentene-1, ethylene and octene-1) and the copolymerization of propylene and α-olefin of 2 to 12 carbon atoms, preferably 2 to 8 carbon atoms(propylene and butene-1, propylene and 4-methylpentene-1, propylene and 4-methylbutene-1, propylene and hexene-1, propylene and octene-1).

In the copolymerization of ethylene or propylene and other α-olefin, the amount of the other α-olefin may be less than 90 mole% with respect to the total monomer. In case of a conventional ethylene copolymer, the amount of the other α-olefin may be less than 40 mole%, preferably less than 30 mole%, and more preferably less than 20 mole% with respect to the total monomer. In case of a conventional propylene copolymer, the amount of the other α-olefin may be 1 to 90 mole%, preferably 5 to 90 mole%, and more preferably 10 to 70 mole% with respect to the total monomer.

The carbon number of the cyclic olefin is 3 to 24, preferably 3 to 18.

Examples of the cyclic olefin include cyclopentene, cyclobutene, cyclohexene, 3-methylcyclohexene, cyclooctene, tetracyclodecene, octacyclodecene, dicyclopentadiene, norbonene, 5-methyl-2-norbonene, 5-ethyl-2-norbonene, 5-isobutyl-2-norbonene, 5,6-dimethyl-2-norbonene, 5,5,6-trimethyl-2-norbonene, and ethylene norbonene. The cyclic olefin can be copolymerized with the α-olefin, and the amount of the cyclic olefin is 1 to 50 mole%, preferably 2 to 50 mole% with respect to the copolymer.

The preferable dienes and trienes include a polyene of 4 to 26 carbon atoms having two or three double bonds. Specific examples of the dienes and the trienes include 1,3-butadiene, 1,4-pentadiene, 1,4-hexadiene, 1,5-hexadiene, 1,9-decadiene, and 2-methyl-1,3-butadiene. Preferable examples of the styrenes include styrene or substituted styrene substituted with an alkyl group of 1 to 10 carbon atoms, an alkoxy group of 1 to 10 carbon atoms, a halogen group, an amine group, a silyl group, and a halogenated alkyl group.

When performing the polymerization or copolymerization of the olefin with the catalyst of the present invention, the amount of the organic transition metal compound of Formula 3 can be varied in wide range. However, the central metal concentration of the organic transition metal compound of Formula 3 is preferably 10⁻⁸ to 10¹ mol/ℓ, and more preferably 10⁻⁷ to 10⁻² mol/ℓ in a polymerization reaction system

In the polymerization or copolymerization of the present invention, the polymerization temperature can also be varied in wide range according to reactants, and reaction conditions. When performing a solution polymerization, the temperature is generally 0 to 250°C, and more preferably 10 to 200°C. When performing a slurry or a gas phase polymerization, the temperature is generally 0 to 120°C, and more preferably 20 to 100°C. The polymerization pressure is generally atmospheric pressure to 500kg/cm², and more preferably atmospheric pressure to 50kg/cm². The polymerization reaction can be carried out in a batch type, a semi-continuous type, or a continuous type reaction. In addition, the polymerization can be carried out by two or more steps of different reaction conditions. The molecular weight of the polymer produced with the olefin polymerization catalyst of the present invention can be controlled by changing the polymerization temperature, or by injecting hydrogen into a reactor.

The olefin polymerization catalyst of the present invention can be used for a prepolymerization of olefin monomer(s) for polymerization of a monomer or for copolymerization of a monomer/a comonomer. In the prepolymerization process, the olefin polymer or copolymer is produced in the amount of 0.05 to 500g, preferably 0.1 to 300g, and more preferably 0.2 to 100g with respect to 1g of the catalyst. Examples of the olefin, which is suitable for the prepolymerization, include α-olefin of 2 to 20 carbon atoms, such as ethylene, propylene, 1-butene, 1-pentene, 4-methyl-1-pentene, 1-hexene, 1-octene, 1-decene, 1-dodecene, 1-tetradecene, 3-methyl-1-butene, and 3-methyl-1-pentene. More suitable olefin for the prepolymerization is the same olefin which is used in a main polymerization.

Hereinafter, the preferable examples are provided for better understanding of the present invention. In the following examples, the olefin polymerization catalyst was produced with Schlenk method in which air and moisture were completely blocked, and purified and dried nitrogen was used as an inert gas. Solvent was dried with sodium metal under inert nitrogen atmosphere. Melt Index(MI) and HLMI(high load Melt Index) of polymer were measured in accordance with ASTM D1238, and a density of polymer was measured in accordance with ASTM D1505.

### [Example 1] Solution polymerization of polyethylene

In a 500ml flask of nitrogen atmosphere, indene(Ind) 1.5mg(0.013mmol), normalbutyl lithium 0.83mg(0.013mmol), and methyl aluminoxane(MAO, Albemarle company, 10% toluene solution) 10ml were mixed and stirred for 1 hour, and then cyclopentadienyl zirconium trichloride 1.57mg(0.006mmol) (Zr = 6.0 µ mol, Al/Zr mole ratio 2,500) was added and stirred at 60°C for 60 minutes. After the completion of the stirring, the obtained catalyst solution was used for a polymerization.

A stainless autoclave reactor of 1L having a jacket for supplying cooling water for controlling a polymerization temperature was purged with isobutane(one time) and ethylene(five times) at 85°C to remove impurities, and then cooled to room temperature. Dried hexane 300ml and triisobutylaluminum(TIBAL, impurity scavenger) 0.5mmol were added into the reactor at room temperature, and heated to a polymerization temperature of 70°C. The obtained catalyst solution was directly added into the reactor, and then the reaction pressure was increased to 14 psig with ethylene(pressure 10psig). The polymerization was carried out for 1 hour, and then reaction gas was discharged, and the reactor was cooled to complete the polymerization reaction. A solution including 300mL of methanol and 5% of HCI was added to the reactant and stirred for about 2 hours to neutralize the MAO component and the active catalyst component remained in the reactant. A slurry including the obtained polymer was filtered and washed with water of 2 liters to remove HCl component, and the washed polymer was dried at 60 °C to produce 45g of polymer. The catalytic activity of polymerization was 5350 g polymer/ mol Zr · hour, and MI((Melt Index) of the obtained polymer was 0.08g/10min, and the density of the obtained polymer was 0.9419 g/cm³.

### [Example 2]

### A. Preparation of catalyst

In a 500ml flask of nitrogen atmosphere, bis(indenyl)ethane 144mg (0.49mmol), butyl lithium 40mg (0.63mmol) and methyl aluminoxane(MAO, Albemarle company, 10% toluene solution) 22ml were mixed and stirred for 2 hours, and then indenyl zirconium trichloride 49mg (0.157mmol) was added and stirred at 50°C for 120 minutes. After the completion of the stirring, silica (Sylopol 948) 5g calcined at 220°C was added to the produced catalyst solution,and ultrasonic wave was applied for 1 hour, and the supernatant was discarded. The remaining solid particles were washed with hexane(1 time), and dried in vacuum to obtain a supported catalyst which was solid powder having free flowability.

### B. Copolymerization of ethylene/hexene-1

A stainless autoclave reactor of 2L having a jacket for supplying cooling water for controlling a polymerization temperature was purged with isobutane(1 time) and ethylene(5 times) at 110°C to remove impurities, and then cooled to 80°C. Isobutane 900ml and triisobutylaluminum(impurity scavenger) 1.0 mmol were added into the washed reactor, and stirred at 80°C. Isobutane 100ml and the obtained supported catalyst 98mg were added into the reactor, and then ethylene and 35ml of 1-hexene were added until the partial pressure of ethylene became 110 psig. The polymerization was carried out at 80°C for 90 minutes while maintaining the total pressure of the reactor to 290 psig. During the polymerization, the partial pressure of ethylene was maintained to 110 psig, and 1-hexene was continuously supplied with a speed of 0.28 ml/minute. After completion of the polymerization, unreacted 1-hexene and isobutane were discharged, and the polymer 59g having free flowability was obtained from the reactor. The catalytic activity of polymerization was 410 g polymer/ g · catalyst · hour, and MI((Melt Index) of the obtained polymer was 0.007 g/10min.

### [Example 3]

### A. Preparation of catalyst

In a 500ml flask of nitrogen atmosphere, indene 61ml (60.85 mg; 0.524.mmol), normalbutyl lithium 35.5mg (0.57mmol) and methyl aluminoxane(MAO, Albemarle company, 10% toluene solution) 22ml were mixed and stirred for 1 hour, and then n-butylcyclopentadienyl zirconium trichloride 85 mg (0.267mmol) was added and stirred at 60°C for 60 minutes. After the completion of the stirring, silica (Sylopol 948) 5g calcined at 220°C was added to the produced catalyst solution, and ultrasonic wave was applied for 1 hour, and the supernatant was discarded. The remaining solid particles were washed with hexane(1 time), and dried in vacuum to obtain a supported catalyst which was solid powder having free flowability.

### B. Copolymerization of ethylene/hexene-1

Except for using the catalyst 101 mg prepared in the above step, the polymerization was carried out for 74 minutes in accordance with the polymerization method of Example 2 to obtain the polymer 195 g. The catalytic activity of polymerization was 1,587 g polymer/ g · catalyst · hour, and MI((Melt Index) of the obtained polymer was 1.89 g/10min, and the density of the obtained polymer was 0.9287 g/cm³.

### [Example 4]

### A. Preparation of catalyst

In a 500ml flask of nitrogen atmosphere, indene 61ml (60.85mg; 0.524 mmol), dibutyl magnesium 36.5 mg (0.57 mmol) and methyl aluminoxane(MAO, Albemarle company, 10% toluene solution) 22ml were mixed and stirred for 1.5 hours, and then cyclopentadienyl zirconium trichloride 70 mg (0.266 mmol) was added and stirred at 60 °C for 60 minutes. After the completion of the stirring, silica (Sylopol 948) 5g calcined at 220°C was added to the produced catalyst solution, and ultrasonic wave was applied for 1 hour, and the supernatant was discarded. The remaining solid particles were washed with hexane(1 time), and dried in vacuum to obtain a supported catalyst which was solid powder having free flowability.

### B. Copolymerization of ethylene/hexene-1

Except for using the catalyst 100 mg prepared in the above step, the polymerization was carried out for 90 minutes in accordance with the polymerization method of Example 2 to obtain the polymer 230 g. The catalytic activity of polymerization was 1,533 g polymer/ g · catalyst · hour, and MI((Melt Index) of the obtained polymer was 0.98 g/10min, and the density of the obtained polymer was 0.9278 g/cm³.

### [Example 5]

### A. Preparation of catalyst

In a 500ml flask of nitrogen atmosphere, indene 61 ml (60.85 mg; 0.524 mmol), normalbutyl lithium 37 mg (0.58 mmol) and methyl aluminoxane(MAO, Albemarle company, 10% toluene solution) 17ml were mixed and stirred for 1 hour, and then pentamethylcyclopentadienyl zirconium trichloride 70 mg (0.21 mmol) was added and stirred at 60°C for 60 minutes. After the completion of the stirring, silica (Sylopol 948) 4g calcined at 220°C was added to the produced catalyst solution, and ultrasonic wave was applied for 1 hour, and the supernatant was discarded. The remaining solid particles were washed with hexane(1 time), and dried in vacuum to obtain a supported catalyst which was solid powder having free flowability.

### B. Copolymerization of ethylene/hexene-1

Except for using the catalyst 100 mg prepared in the above step, the polymerization was carried out for 90 minutes in accordance with the polymerization method of Example 2 to obtain the polymer 137 g. The catalytic activity of polymerization was 836 g polymer/ g · catalyst · hour, and MI((Melt Index) of the obtained polymer was 0.43 g/10min, and the density of the obtained polymer was 0.9291 g/cm³.

### [Example 6]

### A. Preparation of catalyst

In a 500ml flask of nitrogen atmosphere, indene 54 ml (53.86 mg; 0.464 mmol), normalbutyl lithium 33.3 mg (0.52 mmol) and methyl aluminoxane(MAO, Albemarle company, 10% toluene solution) 20ml were mixed and stirred for 2 hours at room temperature, and then cyclopentadienyl zirconium trichloride 55 mg (0.21 mmol) was added and stirred at 30°C for 2 hours. After the completion of the stirring, silica 4g calcined at 220°C was added to the produced catalyst solution, and ultrasonic wave was applied for 1 hour, and the supernatant was discarded. The remaining solid particles were washed with hexane(1 time), and dried in vacuum to obtain a supported catalyst which was solid powder having free flowability.

### B. Copolymerization of ethylene/hexene-1

Except for using the catalyst 100 mg prepared in the above step, the polymerization was carried out for 90 minutes in accordance with the polymerization method of Example 2 to obtain the polymer 295 g. The catalytic activity of polymerization was 1,967 g polymer/ g · catalyst · hour, and MI((Melt Index) of the obtained polymer was 0.95 g/10min, and the density of the obtained polymer was 0.9239 g/cm³.

### [Example 7]

### A. Preparation of catalyst

In a 500ml flask of nitrogen atmosphere, indene 55 ml (54.86 mg; 0.473 mmol) and normalbutyl lithium 34 mg (0.53 mmol) were mixed and stirred for 1 hour at room temperature, and diethylaluminum chloride 65 mg (0.54 mmol) was added thereto and stirred for 30 minutes, and methyl aluminoxane(MAO, Albemarle company, 10% toluene solution) 20ml were mixed and stirred for 10 minutes at room temperature, and then cyclopentadienyl zirconium trichloride 55 mg (0.21 mmol) was added and stirred at 60°C for 1 hour. After the completion of the stirring, silica 4g calcined at 220°C was added to the produced catalyst solution, and ultrasonic wave was applied for 1 hour, and the supernatant was discarded. The remaining solid particles were washed with hexane(1 time), and dried in vacuum to obtain a supported catalyst which was solid powder having free flowability.

### B. Copolymerization of ethylene/hexene-1

Except for using the catalyst 99 mg prepared in the above step, the polymerization was carried out for 106 minutes in accordance with the polymerization method of Example 2 to obtain the polymer 375 g. The catalytic activity of polymerization was 2,144 g polymer/ g · catalyst · hour, and MI((Melt Index) of the obtained polymer was 1.01 g/10min, and the density of the obtained polymer was 0.9251 g/cm³.

### [Example 8]

### A. Preparation of catalyst

In a 500ml flask of nitrogen atmosphere, tetramethylcyclopentadiene 106 ml (86 mg: 0.7mmol), normalbutyl lithium 51.7 mg (0.8 mmol) and methyl aluminoxane(MAO, Albemarle company, 10% toluene solution) 20ml were mixed and stirred for 2 hours at room temperature, and then cyclopentadienyl zirconium trichloride 57 mg (0.217 mmol) was added and stirred at 60°C for 1 hour. After the completion of the stirring, silica 4g calcined at 220°C was added to the produced catalyst solution, and ultrasonic wave was applied for 1 hour, and the supernatant was discarded. The remaining solid particles were washed with hexane(1 time), and dried in vacuum to obtain a supported catalyst which was solid powder having free flowability.

### B. Copolvmerization of ethylene/hexene-1

Except that the catalyst 100 mg prepared in the above step was used, 35 ml of 1-hexene was added at the initial stage, and then 1-hexene was continuously supplied with a speed of 0.56ml/minute, the polymerization was carried out for 90 minutes in accordance with the polymerization method of Example 2 to obtain the polymer 159 g. The catalytic activity of polymerization was 1,060 g polymer/ g · catalyst · hour, and MI((Melt Index) of the obtained polymer was 0.004 g/10min, and the density of the obtained polymer was 0.9226 g/cm³.

### [Example 9]

### A. Preparation of catalyst

In a 500ml flask of nitrogen atmosphere, 2-methylindene 77 ml (74.8 mg: 0.575 mmol), normalbutyl lithium 40 mg (0.63 mmol) and methyl aluminoxane (MAO, Albemarle company, 10% toluene solution) 18ml were mixed and stirred for 2 hours, and then cyclopentadienyl zirconium trichloride 75 mg (0.286 mmol) was added and stirred at 60°C for 60 minutes. After the completion of the stirring, silica 4g calcined at 220°C was added to the produced catalyst solution, and ultrasonic wave was applied for 1 hour, and the supernatant was discarded. The remaining solid particles were washed with hexane(1 time), and dried in vacuum to obtain a supported catalyst which was solid powder having free flowability.

### B. Copolymerization of ethylene/hexene-1

Except for using the catalyst 101 mg prepared in the above step, the polymerization was carried out for 90 minutes in accordance with the polymerization method of Example 2 to obtain the polymer 215 g. The catalytic activity of polymerization was 1,419 g polymer/ g · catalyst · hour, and MI((Melt Index) of the obtained polymer was 0.26 g/10min, and the density of the obtained polymer was 0.9144 g/cm³.

### [Example 10]

### A. Preparation of catalyst

In a 500ml flask of nitrogen atmosphere, tetramethylcyclopentadiene 158 ml (127.7 mg: 0.97 mmol), normalbutyl lithium 63 mg (0.98 mmol) and methyl aluminoxane (MAO, Albemarle company, 10% toluene solution) 50ml were mixed and stirred for 2 hours, and then normal-butylcyclopentadienyl zirconium trichloride 166 mg (0.52 mmol) was added and stirred at 60°C for 2 hours. After the completion of the stirring, silica 10g calcined at 220°C was added to the produced catalyst solution, and ultrasonic wave was applied for 1 hour, and the supernatant was discarded. The remaining solid particles were washed with hexane(1 time), and dried in vacuum to obtain a supported catalyst which was solid powder having free flowability.

### B. Copolymerization of ethylene/hexene-1

Except for using the catalyst 100 mg prepared in the above step, the polymerization was carried out for 90 minutes in accordance with the polymerization method of Example 2 to obtain the polymer 215 g. The catalytic activity of polymerization was 1,433 g polymer/ g · catalyst · hour, and MI((Melt Index) of the obtained polymer was 0.407 g/10min, and the density of the obtained polymer was 0.9256 g/cm³.

From the above Examples, it is clear that the catalyst of the present invention has a high polymerization activity, and the produced polymer has a relatively low melt index and a relatively high molecular weight. From the melt index, the catalyst of the present invention can produce various polymers having low molecular weights. Namely, the catalyst of the present invention can be prepared by a very simple process, has a high polymerization activity, and produce various olefin polymers having relatively high molecular weights by simply changing or selecting the components thereof. By appropriately selecting the organic compound of Formula 1, the organometallic compound of Formula 2, and the organic transition metal compound of Formula 3, the polymerization catalyst of the present invention can produce various polymers having different melt indexes (MI) and molecular weights, particularly, a polymer having a relatively low melt index and a relatively high molecular weight.

## Claims

1. A method for preparing an olefin polymerization catalyst, comprising: first mixing an organic compound of Formula 1, an organometallic compound of Formula 2 and an aluminoxane, and then adding thereto a reaction mixture of an organic transition metal compound of Formula 3 and the aluminoxane and mixing, wherein:
[Formula 1] R¹-H or R¹-Q-R¹
In Formula 1, R¹ is a cyclic hydrocarbyl group of 5 to 30 carbon atoms having at least 2 conjugated double bonds, and can be unsubstituted or partially substituted with 1 to 6 substituents which are selected from the group consisting of an alkyl group of 1 to 20 carbon atoms, an alkenyl group of 3 to 20 carbon atoms, a cycloalkyl group of 3 to 20 carbon atoms, a haloalkyl group of 1 to 20 carbon atoms, an aryl group of 6 to 20 carbon atoms, an arylalkyl group of 6 to 20 carbon atoms, an arylsilyl group of 6 to 20 carbon atoms, an alkylaryl group of 6 to 20 carbon atoms, an alkoxy group of 1 to 20 carbon atoms, an alkylsiloxy group of 1 to 20 carbon atoms, an aryloxy group of 6 to 20 carbon atoms, a halogen atom, an amino group and the mixtures thereof;
Q is a divalent group selected from the group consisting of (CR⁵₂)_{b}, (SiR⁵₂)_{b}, (GeR⁵₂)_{b}, NR⁵ and PR⁵ for bridging R¹_{S}, wherein the substituent R⁵ is independently a hydrogen atom, an alkyl radical of 1 to 20 carbon atoms, a cycloalkyl radical of 3 to 20 carbon atoms, an alkenyl radical of 1 to 20 carbon atoms, an aryl radical of 6 to 20 carbon atoms, an alkylaryl radical of 7 to 20 carbon atoms or arylalkyl radical of 7 to 20 carbon atoms, b is an integer of 1 to 4, when Q is (CR⁵₂)_{b}, (SiR⁵₂)_{b} or (GeR⁵₂)_{b}, the two substituents R⁵ that are bonded to carbon(C), silicon(Si), germanium(Ge) can be connected with each other to form a ring of 2 to 7 carbon atoms,
[Formula 2] M¹R²ₘR³ₙR⁴ₚR⁶_{q}
In Formula 2, M¹ is an element selected from the group consisting of elements of Group 1, 2, 12, 13 and 14 of the Periodic Table, R², R³, R⁴ and R⁶ are independently a hydrocarbyl group of 1 to 24 carbon atoms, an amide group, an alkoxy group or a halogen atom, m, n, p and q are independently 0 or 1, and m+n+p+q is equal to the valence of M¹,
[Formula 3] M²R⁷ᵣXₛ
In Formula 3, M² is titanium(Ti), zirconium(Zr) or hafnium(Hf), R⁷ is same as defined for R¹, X is a halogen atom, r is an integer of 0 or 1, s is an integer of 3 or 4, and r+s is equal to the valence of metal M².

2. The method for preparing an olefin polymerization catalyst of claim 1, wherein the olefin polymerization catalyst is supported with an organic or inorganic carrier.

3. The method for preparing an olefin polymerization catalyst of claim 2, wherein the olefin polymerization catalyst supported with the carrier is prepared by contacting the olefin polymerization catalyst with a porous carrier to form a slurry state; treating the catalyst of the slurry state with an acoustic wave or oscillating wave having the frequency of 1 to 10,000kHz at 0°C to 120°C for 1 to 6 hours to uniformly infiltrate the catalyst components into the pores of the carrier; and drying the catalyst components infiltrated into the pores of the carrier under vacuum or nitrogen flow to form the catalyst of a solid powder state.

4. The method for preparing an olefin polymerization catalyst of claim 1, wherein R¹ of the organic compound of Formula 1 is a cyclic hydrocarbyl group of 5 to 30 carbon atoms having 2 to 4 conjugated double bonds.

5. The method for preparing an olefin polymerization catalyst of claim 1, wherein M¹ of the organometallic compound of Formula 2 is Lithium(Li), Sodium(Na), Magnesium (Mg) or Aluminum (Al), R², R³, R⁴ and R⁶ are independently selected from the group consisting of a hydrocarbyl group of 1 to 24 carbon atoms, an amide group, an alkoxy group or a halogen atom.

6. The method for preparing an olefin polymerization catalyst of claim 1, wherein R⁷ of the organic transition metal compound of Formula 3 is selected from the group consisting of a cyclopentadienyl, a substituted cyclopentadienyl, an indenyl, a substituted indenyl, an azulenyl, a substituted azulenyl, a fluorenyl, a substituted fluorenyl group and mixtures thereof.

7. The method for preparing an olefin polymerization catalyst of claim 1, wherein an amount of the organic compound of Formula 1 is 0.2 to 20 mole, an amount of the organometallic compound of Formula 2 is 0.22 to 22 mole, and an amount of aluminum of the aluminoxane is 1 to 100,000 mole with respect to 1 mole of the organic transition metal compound of Formula 3.

8. An olefin polymerization method including a step of polymerizing at least one olefin in the presence of the olefin polymerization catalyst prepared by the method according to one of claims 1 to 7.

9. An olefin polymerization catalyst obtainable by the method according to one of claims 1 to 7.

## Patentansprüche

1. Verfahren zum Herstellen eines Olefinpolymerisationskatalysators, umfassend: zuerst Vermischen einer organischen Verbindung der Formel 1, einer metallorganischen Verbindung der Formel 2 und eines Aluminoxans und dann Zugeben dazu einer Reaktionsmischung einer organischen Übergangsmetallverbindung der Formel 3 und des Aluminoxans und Vermischen, wobei:
[Formel 1] R¹-H oder R¹-Q-R¹
in Formel 1 R¹ eine cyclische Hydrocarbylgruppe von 5 bis 30 Kohlenstoffatomen mit wenigstens 2 konjugierten Doppelbindungen ist und unsubstituiert oder teilweise substituiert mit 1 bis 6 Substituenten sein kann, die ausgewählt sind aus der Gruppe, bestehend aus einer Alkylgruppe von 1 bis 20 Kohlenstoffatomen, einer Alkenylgruppe von 3 bis 20 Kohlenstoffatomen, einer Cycloalkylgruppe von 3 bis 20 Kohlenstoffatomen, einer Haloalkylgruppe von 1 bis 20 Kohlenstoffatomen, einer Arylgruppe von 6 bis 20 Kohlenstoffatomen, einer Arylalkylgruppe von 6 bis 20 Kohlenstoffatomen, einer Arylsilylgruppe von 6 bis 20 Kohlenstoffatomen, einer Alkylarylgruppe von 6 bis 20 Kohlenstoffatomen, einer Alkoxygruppe von 1 bis 20 Kohlenstoffatomen, einer Alkylsiloxylgruppe von 1 bis 20 Kohlenstoffatomen, einer Aryloxygruppe von 6 bis 20 Kohlenstoffatomen, einem Halogenatom, einer Aminogruppe und den Mischungen davon;
Q eine divalente Gruppe ist, ausgewählt aus der Gruppe, bestehend aus (CR⁵₂)_{b}, (SiR⁵₂)_{b}, (GeR⁵₂)_{b}, NR⁵ und PR⁵ zum Überbrücken von R¹s, wobei der Substituent R⁵ unabhängig ein Wasserstoffatom, ein Alkylradikal von 1 bis 20 Kohlenstoffatomen, ein Cycloalkylradikal von 3 bis 20 Kohlenstoffatomen, ein Alkenylradikal von 1 bis 20 Kohlenstoffatomen, ein Arylradikal von 6 bis 20 Kohlenstoffatomen, ein Alkylarylradikal von 7 bis 20 Kohlenstoffatomen oder Arylalkylradikal von 7 bis 20 Kohlenstoffatomen ist, b eine ganze Zahl von 1 bis 4 ist, wenn Q (CR⁵₂)_{b}, (SiR⁵₂)_{b} oder (GeR⁵₂)_{b} ist, die zwei Substituenten R⁵, die an Kohlenstoff (C), Silicium (Si), Germanium (Ge) gebunden sind, miteinander verbunden sein können, um einen Ring von 2 bis 7 Kohlenstoffatomen zu bilden,
[Formel 2] M¹R²ₘR³ₙR⁴ₚR⁶_{q}
in Formel 2 M¹ ein Element ist, ausgewählt aus der Gruppe, bestehend aus Elementen der Gruppe 1, 2, 12, 13 und 14 des Periodensystems, R², R³, R⁴ und R⁶ unabhängig eine Hydrocarbylgruppe von 1 bis 24 Kohlenstoffatomen, eine Amidgruppe, eine Alkoxygruppe oder ein Halogenatom sind, m, n, p und q unabhängig 0 oder 1 sind und m+n+p+q gleich der Wertigkeit von M¹ ist,
[Formel 3] M²R⁷ᵣXₛ
in Formel 3 M² Titan (Ti), Zirkonium (Zr) oder Hafnium (Hf) ist, R⁷ das gleiche ist wie für R¹ definiert, X ein Halogenatom ist, r eine ganze Zahl von 0 oder 1 ist, s eine ganze Zahl von 3 oder 4 ist und r+s gleich der Wertigkeit von Metall M² ist.

2. Verfahren zum Herstellen eines Olefinpolymerisationskatalysators gemäß Anspruch 1, wobei der Olefinpolymerisationskatalysator mit einem organischen oder anorganischen Träger geträgert wird.

3. Verfahren zum Herstellen eines Olefinpolymerisationskatalysators gemäß Anspruch 2, wobei der mit dem Träger geträgerte Olefinpolymerisationskatalysator hergestellt wird durch Inkontaktbringen des Olefinpolymerisationskatalysators mit einem porösen Träger, so dass ein Aufschlämmungszustand gebildet wird; Behandeln des Katalysators des Aufschlämmungszustands mit einer akustischen Welle oder oszillierenden Welle mit der Frequenz von 1 bis 10.000 kHz bei 0°C bis 120°C für 1 bis 6 Stunden, so dass die Katalysatorkomponenten gleichmäßig in die Poren des Trägers eindringen; und Trocknen der in die Poren des Trägers eingedrungenen Katalysatorkomponenten unter Vakuum oder Stickstoffstrom, so dass der Katalysator eines festen Pulverzustands gebildet wird.

4. Verfahren zum Herstellen eines Olefinpolymerisationskatalysators gemäß Anspruch 1, wobei R¹ der organischen Verbindung der Formel 1 eine cyclische Hydrocarbylgruppe von 5 bis 30 Kohlenstoffatomen mit 2 bis 4 konjugierten Doppelbindungen ist.

5. Verfahren zum Herstellen eines Olefinpolymerisationskatalysators gemäß Anspruch 1, wobei M¹ der metallorganischen Verbindung der Formel 2 Lithium (Li), Natrium (Na), Magnesium (Mg) oder Aluminium (Al) ist, R², R³, R⁴ und R⁶ unabhängig ausgewählt sind aus der Gruppe, bestehend aus einer Hydrocarbylgruppe von 1 bis 24 Kohlenstoffatomen, einer Amidgruppe, einer Alkoxygruppe oder einem Halogenatom.

6. Verfahren zum Herstellen eines Olefinpolymerisationskatalysators gemäß Anspruch 1, wobei R⁷ der organischen Übergangsmetallverbindung der Formel 3 ausgewählt ist aus der Gruppe, bestehend aus einer Cyclopentadienyl-, einer substituierten Cyclopentadienyl-, einer Indenyl-, einer substituierten Indenyl-, einer Azulenyl-, einer substituierten Azulenyl-, einer Fluorenyl-, einer substituierten Fluorenylgruppe und Mischungen davon.

7. Verfahren zum Herstellen eines Olefinpolymerisationskatalysators gemäß Anspruch 1, wobei die Menge der organischen Verbindung der Formel 1 0,2 bis 20 mol beträgt, die Menge der metallorganischen Verbindung der Formel 2 0,22 bis 22 mol beträgt und die Menge an Aluminium des Aluminoxans 1 bis 100.000 mol, bezogen auf 1 mol der organischen Übergangsmetallverbindung der Formel 3, beträgt.

8. Olefinpolymerisationsverfahren, umfassend einen Schritt, bei dem wenigstens ein Olefin in der Anwesenheit des durch das Verfahren gemäß einem der Ansprüche 1 bis 7 hergestellten Olefinpolymerisationskatalysators polymerisiert wird.

9. Olefinpolymerisationskatalysator, erhältlich durch das Verfahren gemäß einem der Ansprüche 1 bis 7.

## Revendications

1. Procédé de préparation d'un catalyseur de polymérisation d'oléfine, comprenant : un premier mélange d'un composé organique de formule 1, d'un composé organométallique de formule 2 et d'un aluminoxane, et ensuite l'ajout à ceci d'un mélange réactionnel contenant un composé organique de métal de transition de formule 3 et l'aluminoxane, et un mélange, dans lequel :
[Formule 1] R¹-H ou R¹-Q-R¹
dans la formule 1, R¹ est un groupe hydrocarbyle cyclique contenant 5 à 30 atomes de carbone ayant au moins 2 liaisons doubles conjuguées, et peut être non substitué ou partiellement substitué avec 1 à 6 substituants qui sont sélectionnés dans le groupe constitué d'un groupe alkyle contenant 1 à 20 atomes de carbone, d'un groupe alcényle contenant 3 à 20 atomes de carbone, d'un groupe cycloalkyle contenant 3 à 20 atomes de carbone, d'un groupe haloalkyle contenant 1 à 20 atomes de carbone, d'un groupe aryle contenant 6 à 20 atomes de carbone, d'un groupe arylalkyle contenant 6 à 20 atomes de carbone, d'un groupe arylsilyle contenant 6 à 20 atomes de carbone, d'un groupe alkylaryle contenant 6 à 20 atomes de carbone, d'un groupe alcoxy contenant 1 à 20 atomes de carbone, d'un groupe alkylsiloxy contenant 1 à 20 atomes de carbone, d'un groupe aryloxy contenant 6 à 20 atomes de carbone, d'un atome d'halogène, d'un groupe amino et des mélanges de ceux-ci ;
Q est un groupe divalent sélectionné dans le groupe constitué de (CR⁵₂)_{b}, (SiR⁵₂)_{b}, (GeR⁵₂)_{b}, NR⁵ et PR⁵ pour relier les R¹s, dans lequel le substituant R⁵ est indépendamment un atome d'hydrogène, un radical alkyle contenant 1 à 20 atomes de carbone, un radical cycloalkyle contenant 3 à 20 atomes de carbone, un radical alcényle contenant 1 à 20 atomes de carbone, un radical aryle contenant 6 à 20 atomes de carbone, un radical alkylaryle contenant 7 à 20 atomes de carbone ou un radical arylalkyle contenant 7 à 20 atomes de carbone, b est un nombre entier allant de 1 à 4, quand Q est (CR⁵₂)_{b}, (SiR⁵₂)_{b} ou (GeR⁵₂)_{b}, les deux substituants R⁵ qui sont liés au carbone (C), au silicium (Si), au germanium (Ge) peuvent être connectés l'un à l'autre pour former un cycle contenant 2 à 7 atomes de carbone,
[Formule 2] M¹R²ₘR³ₙR⁴ₚR⁶_{q}
dans la formule 2, M¹ est un élément sélectionné dans le groupe constitué des éléments des groupes 1, 2, 12, 13 et 14 du tableau périodique, R², R³, R⁴ et R⁶ sont indépendamment un groupe hydrocarbyle contenant 1 à 24 atomes de carbone, un groupe amide, un groupe alcoxy ou un atome d'halogène, m, n, p et q sont indépendamment 0 ou 1, et m+n+p+q est égal à la valence de M¹,
[Formule 3] M²R⁷ᵣXₛ
dans la formule 3, M² est un titane (Ti), un zirconium (Zr) ou un hafnium (Hf), R⁷ a la même définition que R¹, X est un atome d'halogène, r est un nombre entier égal à 0 ou 1, s est un nombre entier égal à 3 ou 4, et r+s est égal à la valence du métal M².

2. Procédé de préparation d'un catalyseur de polymérisation d'oléfine selon la revendication 1, dans lequel le catalyseur de polymérisation d'oléfine est supporté avec un support organique ou inorganique.

3. Procédé de préparation d'un catalyseur de polymérisation d'oléfine selon la revendication 2, dans lequel le catalyseur de polymérisation d'oléfine supporté avec le support est préparé par la mise en contact du catalyseur de polymérisation d'oléfine avec un support poreux pour former un état de suspension ; le traitement du catalyseur de l'état de suspension avec une onde acoustique ou une onde oscillante ayant la fréquence de 1 à 10 000 kHz à une température de 0 °C à 120 °C pendant 1 à 6 heures pour infiltrer uniformément les composants catalytiques dans les pores du support; et le séchage des composants catalytiques infiltrés dans les pores du support sous vide ou sous un flux d'azote pour former le catalyseur d'un état pulvérulent solide.

4. Procédé de préparation d'un catalyseur de polymérisation d'oléfine selon la revendication 1, dans lequel R¹ du composé organique de formule 1 est un groupe hydrocarbyle cyclique contenant 5 à 30 atomes de carbone ayant 2 à 4 liaisons doubles conjuguées.

5. Procédé de préparation d'un catalyseur de polymérisation d'oléfine selon la revendication 1, dans lequel M¹ du composé organométallique de formule 2 est un lithium (Li), un sodium (Na), un magnésium (Mg) ou un aluminium (Al), R², R³, R⁴ et R⁶ sont sélectionnés indépendamment dans le groupe constitué d'un groupe hydrocarbyle contenant 1 à 24 atomes de carbone, d'un groupe amide, d'un groupe alcoxy ou d'un atome d'halogène.

6. Procédé de préparation d'un catalyseur de polymérisation d'oléfine selon la revendication 1, dans lequel R⁷ du composé organique de métal de transition de formule 3 est sélectionné dans le groupe constitué d'un cyclopentadiényle, d'un cyclopentadiényle substitué, d'un indényle, d'un indényle substitué, d'un azulényle, d'un azulényle substitué, d'un fluorényle, d'un groupe fluorényle substitué et de mélanges de ceux-ci.

7. Procédé de préparation d'un catalyseur de polymérisation d'oléfine selon la revendication 1, dans lequel une quantité du composé organique de formule 1 est de 0,2 à 20 moles, une quantité du composé organométallique de formule 2 est de 0,22 à 22 moles, et une quantité d'aluminium de l'aluminoxane est de 1 à 100 000 moles par rapport à 1 mole du composé organique de métal de transition de formule 3.

8. Procédé de polymérisation d'oléfine comprenant une étape de polymérisation d'au moins une oléfine en présence du catalyseur de polymérisation d'oléfine préparé par le procédé selon l'une des revendications 1 à 7.

9. Catalyseur de polymérisation d'oléfine pouvant être obtenu par le procédé selon l'une des revendications 1 à 7.
